# EUROPEAN PATENT SPECIFICATION

(11) **EP 3 540 596 B1**
(45) Date of publication and mention of the grant of the patent: **19.05.2021**
(21) Application number: 17885299.2
(22) Date of filing: 23.08.2017
(51) Int. Cl.: G06F 9/44, G06F 8/75

(54) **DETERMINATION DEVICE, DETERMINATION METHOD, AND DETERMINATION PROGRAM**
BESTIMMUNGSVORRICHTUNG, BESTIMMUNGSVERFAHREN UND BESTIMMUNGSPROGRAMM
DISPOSITIF DE DÉTERMINATION, PROCÉDÉ DE DÉTERMINATION ET PROGRAMME DE DÉTERMINATION

(30) Priority: 19.12.2016 JP 2016245768
(43) Date of publication of application: 18.09.2019
(73) Proprietor: Nippon Telegraph and Telephone Corporation, Tokyo 100-8116 (JP)
(72) Inventor: KANEI, Fumihiro, Musashino-shi Tokyo 180-8585 (JP); AKIYAMA, Mitsuaki, Musashino-shi Tokyo 180-8585 (JP); TAKATA, Yuta, Musashino-shi Tokyo 180-8585 (JP); YAGI, Takeshi, Musashino-shi Tokyo 180-8585 (JP)
(74) Representative: Hoffmann Eitle
(86) International application number: PCT/JP2017/030038
(87) International publication number: WO 2018/116522

(56) References cited:
- WO-A1-2016/027641
- JP-A- 2012 234 401
- US-A1- 2011 078 674
- HIROKI HADA et al.: "BinGrep: Proposing the Efficient Static Analysis Method by Searching for the Function Comparing Control Flow Graphs", Proceedings of Computer Security Symposium 2016, vol. 2016, no. 2, 4 October 2016 (2016-10-04), pages 676-683, XP009515820,

## Description

### Field

The present invention relates to a determination apparatus, a determination method, and a determination program.

### Background

A binary representation (hereinafter, referred to as byte code) of an execution file (hereinafter, referred to as a program) is data generated by a compiler from source code written in specific programming language, which is processed, by software, to be able to be executed under specific environment.

As a unit for efficiently creating the program, source code shared on the Internet (including a code snippet as fragmentary source code) is utilized.

For example, GitHub (for example, refer to Non Patent Literature 1) provides a service for maintaining and managing source code of a program created by a programmer, and opens many kinds of source code to the public. Additionally, stackoverflow (for example, refer to Non Patent Literature 2) and Qiita (for example, refer to Non Patent Literature 3) provide a service for sharing information for programmers on the Internet. In these services, source code written by a large number of unspecified users is shared.

However, some kinds of source code published in these services do not have a reputation in view of security although an operation thereof has a reputation, so that there are some kinds of source code having a security problem. Thus, it is not recommended to use source code created by another person as it is to create a program, and it is important to determine that the program is created by using specific source code.

There is known a method of receiving inputs of two different programs or two different kinds of source code and calculating a similarity therebetween. For example, as the method of calculating the similarity, there is known a method of creating, from a program, data representing a feature amount of the program, receiving an input of a result of applying fuzzy hashing to the data, and making a comparison therebetween (for example, refer to Non Patent Literature 4). There is also known a method of constructing a program dependent graph from a program, and making a comparison on the program dependent graph (for example, refer to Non Patent Literature 5).

Also, a system and method for automatically determining whether a newer version of an application programming interface (API) is backwards compatible with an older version is disclosed is known (for example, refer to Patent Literature 1). Such a method includes comparing the two versions of the API to determine a set of atomic differences between the two versions and applying a set of backwards compatibility rules to the set of atomic differences. For each atomic difference, applying the rules includes analyzing the atomic difference to determine any applicable backwards compatibility rules and evaluating each applicable rule for the atomic difference to determine whether the atomic difference represents a violation. The method also includes storing an indication of any backwards compatibility violations from the evaluation.

### Citation List

### Non Patent Literature

Non Patent Literature 1: GitHub, [online], [searched on Dec. 9, 2016], Internet <URL: https://github.com>
Non Patent Literature 2: StackOverflow, [online], [searched on Dec. 9, 2016], Internet <URL: http://stackoverflow.com/company/about>
Non Patent Literature 3: Qiita, [online], [searched on Dec. 9, 2016], Internet <URL: https://qiita.com/about>
Non Patent Literature 4: W. Zhou, Y. Zhou, X. Jiang, and P. Ning, "Detecting Repackaged Smartphone Applications in Third-Party Android Marketplaces", in Proceedings of the ACM Conference Data Application Security Privacy (CODASPY), pp. 317-326, 2012.
Non Patent Literature 5: J. Crussell, C. Gibler, and H. Chen, "Attack of the Clones: Detecting Cloned Applications on Android Markets", in Proceedings of the European Symposium on Research in Computer Security (ESORICS), pp. 37-54, 2012.

### Patent Literature

Patent Literature 1: US 2011/078674 A1

### Summary

### Technical Problem

However, in the above-described method of calculating a similarity between programs, two pieces of information to be input are required to have the same data format. This is because, in the above-described method of calculating a similarity between programs, in a case of comparing byte code of the program source code, the similarity is required to be calculated after the source code is compiled into the byte code.

On the other hand, source code that is open to the public on the Internet is fragmentary code such as a code snippet in many cases. In this case, it is difficult to compile the source code into the byte code. This is because enormous human labor is required at least to complement information required for compiling in a case in which the source code is fragmentary code. Thus, in the above-described method of calculating a similarity between programs, it is difficult to compile the source code into the byte code, and it is difficult to calculate the similarity between the byte code of the program and the source code.

In this way, in the related art, it is difficult to calculate the similarity between the byte code of the program and the source code in a case in which data formats of the byte code of the program and the source code are different, so that it is difficult to determine whether the program is generated by using specific source code.

The present invention is made in view of such a situation, and provides a determination apparatus, a determination method, and a determination program that can appropriately calculate a similarity between byte code of a program and source code even when the byte code of the program and the source code have different data formats. Solution to Problem

The above-mentioned technical problem is solved by the subject-matter of the independent claims, and the dependent claims describe further preferred embodiments.

### Advantageous Effects of Invention

According to the present invention, even in a case in which byte code and source code as comparison targets have different data formats, it is possible to determine whether a program is generated by using specific source code.

### Brief Description of Drawings

FIG. 1 is a block diagram illustrating a configuration of a determination apparatus according to an embodiment.
FIG. 2 is a diagram illustrating an example of source code implemented in the programming language, Java (registered trademark) and feature information extracted from the source code.
FIG. 3 is a diagram illustrating an example of byte code implemented in the programming language Java and feature information extracted from the byte code.
FIG. 4 is a flowchart illustrating a processing procedure of determination processing performed by the determination apparatus illustrated in FIG. 1.
FIG. 5 is a flowchart illustrating a processing procedure of source code feature information extraction processing illustrated in FIG. 4.
FIG. 6 is a flowchart illustrating a processing procedure of byte code feature information extraction processing illustrated in FIG. 4.
FIG. 7 is a flowchart illustrating a processing procedure of similarity calculation processing illustrated in FIG. 4.
FIG. 8 is a diagram illustrating an example of a computer in which a determination apparatus is implemented when a program is executed.

### Description of Embodiments

The following describes an embodiment of the present invention in detail with reference to the drawings. The present invention is not limited to the embodiment. In the drawings, the same parts are denoted by the same reference numerals.

### Embodiment

The following describes the embodiment of the present invention. The embodiment of the present invention describes a determination apparatus, a determination method, and a determination program for determining whether a program is generated by using specific source code. First, the following describes an outline of the determination apparatus according to the embodiment.

### Configuration of determination apparatus

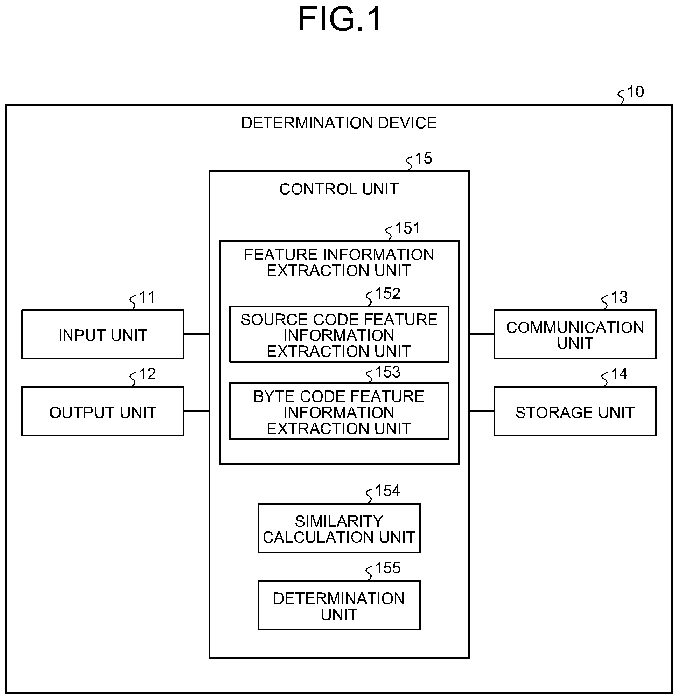

FIG. 1 is a block diagram illustrating a configuration of the determination apparatus according to the present embodiment. As illustrated in FIG. 1, a determination apparatus 10 includes an input unit 11, an output unit 12, a communication unit 13, a storage unit 14, and a control unit 15.

The input unit 11 is an input interface that receives various operations from an operator of the determination apparatus 10. For example, the input unit 11 is constituted of a touch panel, a voice input device, and an input device such as a keyboard and a mouse.

The output unit 12 is, for example, implemented by a display device such as a liquid crystal display, a printing device such as a printer, and an information communication device. The output unit 12 outputs a result of determination processing (described later) to the operator.

The communication unit 13 is a communication interface that transmits and receives various pieces of information to/from another device connected thereto via a network and the like. The communication unit 13 is implemented by a network interface card (NIC) and the like, and achieves communication between another device and the control unit 15 via an electric communication line such as a local area network (LAN) and the Internet.

The storage unit 14 is implemented by a semiconductor memory element such as a random access memory (RAM) and a flash memory, or a storage device such as a hard disk and an optical disc, and stores therein a processing program for operating the determination apparatus 10, data that is used during execution of the processing program, and the like.

The control unit 15 includes an internal memory for storing a program specifying various processing procedures and required data, and executes various kinds of processing using the program and the required data. For example, the control unit 15 is an electronic circuit such as a central processing unit (CPU) and a micro processing unit (MPU). The control unit 15 includes a feature information extraction unit 151, a similarity calculation unit 154, and a determination unit 155.

The feature information extraction unit 151 extracts, as feature information, function definition information as information defining a function and function calling order information in which function names to be executed in the function are written in execution order, from each of an input source code and a byte code of the program. For example, the feature information extraction unit 151 extracts, as the function definition information, a modifier, an identifier, and types of an argument and a return value. The function definition information and the function calling order information can be extracted irrespective of the data format of the source code and the byte code. The feature information extraction unit 151 outputs, to the similarity calculation unit 154, respective pieces of feature information extracted from the input source code and the byte code of the program. The feature information extraction unit 151 includes a source code feature information extraction unit 152 and a byte code feature information extraction unit 153.

The source code feature information extraction unit 152 receives an input of the source code or a code snippet as part of the source code, and extracts, as feature data, information of a function definition and function calling order included in the source code. At this point, in a case in which the source code lacks type information of a variable or information of a package structure, the source code feature information extraction unit 152 complements the information assuming that lacking portion is information of a certain type or a certain package structure. Subsequently, the source code feature information extraction unit 152 extracts the feature information.

The byte code feature information extraction unit 153 receives an input of the byte code of the program, and extracts the feature information by analyzing the byte code. At this point, in a case in which an identifier of a function in the byte code is obfuscated, and the definition of the function and calling of the function can be associated therewith, the byte code feature information extraction unit 153 regards the identifier of the function as a certain character string, and complements the information. Subsequently, the byte code feature information extraction unit 153 extracts the feature information.

The similarity calculation unit 154 calculates a similarity between the function in the source code and the function in the byte code using the feature information extracted by the feature information extraction unit 151. The similarity calculation unit 154 calculates similarities corresponding to the respective function definition information and function calling order information.

Specifically, the similarity calculation unit 154 calculates the similarity based on the modifier, the identifier, and the types of the argument and the return value extracted by the feature information extraction unit 151 as the function definition information. For example, by comparing the source code with the byte code to determine whether the modifier, the identifier, and the types of the argument and the return value are identical using the function definition information, the similarity calculation unit 154 calculates the similarity in consideration of identity of the function definition.

The similarity calculation unit 154 calculates the similarity by applying a comparison algorithm in consideration of an order relation to the function calling order information extracted by the feature information extraction unit 151. Specifically, the similarity calculation unit 154 applies an algorithm such as an edit distance (Levenshtein Distance) and a longest common sequence to the function calling order information of each of the source code and the byte code to calculate the similarity in consideration of a partial sequence of the function calling order.

The determination unit 155 determines, based on the similarity calculated by the similarity calculation unit 154, whether the program is generated by using specific source code. The determination unit 155 determines whether the program is generated by using the specific source code, by using the similarity in consideration of identity of the function definition and the similarity in consideration of a partial sequence of the function calling order. Subsequently, the following describes specific examples of processing content of each constituent part of the control unit 15.

### Processing performed by source code feature information extraction unit

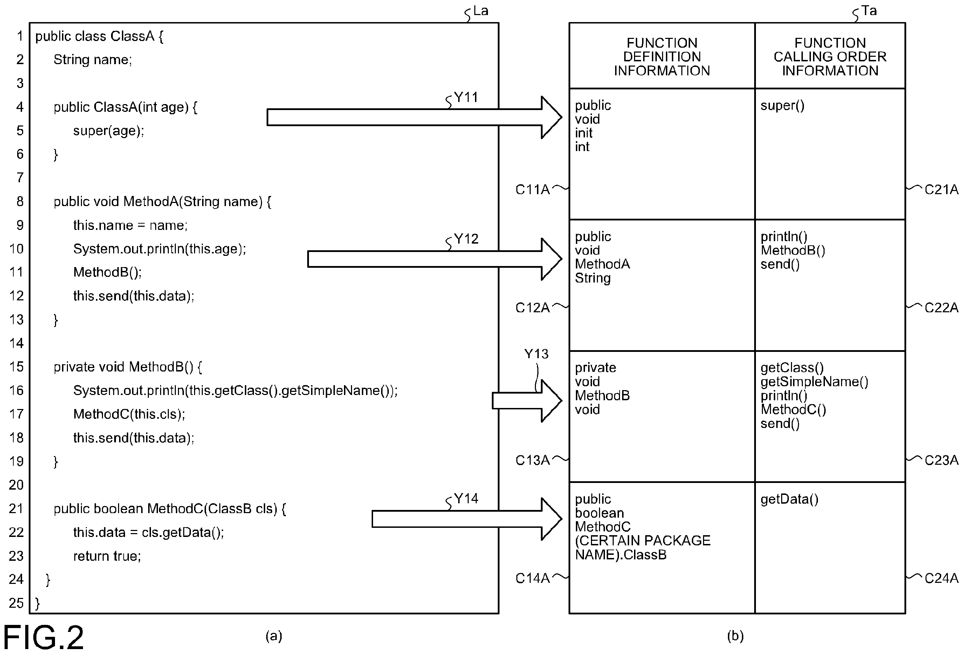

First, the following describes processing performed by the source code feature information extraction unit 152. FIG. 2 is a diagram illustrating an example of source code implemented in the programming language Java and feature information extracted from the source code. FIG. 2(a) illustrates source code La by way of example, and FIG. 2(b) illustrates feature information Ta extracted from the source code La. In the feature information Ta, the function definition information is written in a left column, and the function calling order information is written in a right column.

The source code feature information extraction unit 152 extracts, from the source code La (refer to FIG. 2(a)), a modifier, a type of a return value, an identifier, and a type of an argument as the function definition information. The source code feature information extraction unit 152 writes the extracted pieces of function definition information in the left column of the feature information Ta (refer to FIG. 2(b)) as indicated by arrows Y11 to Y14.

For example, the source code feature information extraction unit 152 extracts the modifier (public), the type of the return value (void), the identifier (init), and the type of the argument (int) from the 4th line to the 6th line of the source code La, and writes them in a cell C11A of the feature information Ta as the function definition information as indicated by the arrow Y11. The source code feature information extraction unit 152 extracts "public", "void", "MethodA", and "String" from the 8th line to the 13th line of the source code La, and writes them in a cell C12A of the feature information Ta as the function definition information as indicated by the arrow Y12. The source code feature information extraction unit 152 extracts "private", "void", "MethodB", and "void" from the 15th line to the 19th line of the source code La, and writes them in a cell C13A of the feature information Ta as the function definition information as indicated by the arrow Y13.

Additionally, the source code feature information extraction unit 152 extracts, from the source code La (refer to FIG. 2(a)), function names to be executed in the function in execution order as the function calling order information. The source code feature information extraction unit 152 sequentially writes, as the function calling order information, the extracted function names in the right column of the feature information Ta (refer to FIG. 2(b)) in the execution order as indicated by the arrows Y11 to Y14.

For example, the source code feature information extraction unit 152 extracts the function name (super) to be executed in the function from the 4th line to the 6th line of the source code La, and writes the extracted function name (super) in a cell C21A of the feature information Ta as the function calling order information as indicated by the arrow Y11. The source code feature information extraction unit 152 extracts the function names (println, MethodB, send) to be executed in the function from the 8th line to the 13th line of the source code La. The source code feature information extraction unit 152 sequentially writes the extracted function names (println, MethodB, send) in a cell C22A of the feature information Ta as the function calling order information in the execution order as indicated by the arrow Y12. The source code feature information extraction unit 152 extracts "getClass", "getSimpleName", "println", "MethodC", and "send" from the 15th line to the 19th line of the source code La as the function calling order information, and writes them in a cell C23A of the feature information Ta in the execution order as indicated by the arrow Y13.

In a case in which the source code is fragmentary and lacks the information such as a variable, a type, and a package structure, the source code feature information extraction unit 152 regards lacking portions as a certain variable, a certain type, and a certain package structure, and complements the information to extract the feature information.

For example, regarding Java, the type of the variable is represented by a fully qualified name (for example, java.lang.String) obtained by combining a package name to which a class of an object stored in the variable belongs and a class name of the object. However, in actual source code, a portion of the package name can be omitted from the fully qualified name by making an import declaration in advance.

Specifically, the source code La lacks the import declaration, so that the fully qualified name of "ClassB" (the 21st line) as the argument of the function "MethodC" is unknown. In this case, the source code feature information extraction unit 152 regards the type of "ClassB" as "(certain package name).ClassB", and complements "(certain package name).ClassB" to be extracted as the feature information. The source code feature information extraction unit 152 writes the extracted "(certain package name).ClassB" in a cell C14A of the feature information Ta.

Thus, the source code feature information extraction unit 152 extracts "public", "boolean", and "MethodC" from the 21st line to the 24th line of the source code La, and writes the complemented "(certain package name).ClassB" in the cell C14A as indicated by the arrow Y14. The source code feature information extraction unit 152 extracts "getData" from the 21st line to the 22nd line of the source code La as the function calling order information, and writes it in a cell C24A of the feature information Ta as indicated by the arrow Y14.

### Processing performed by byte code feature information extraction unit

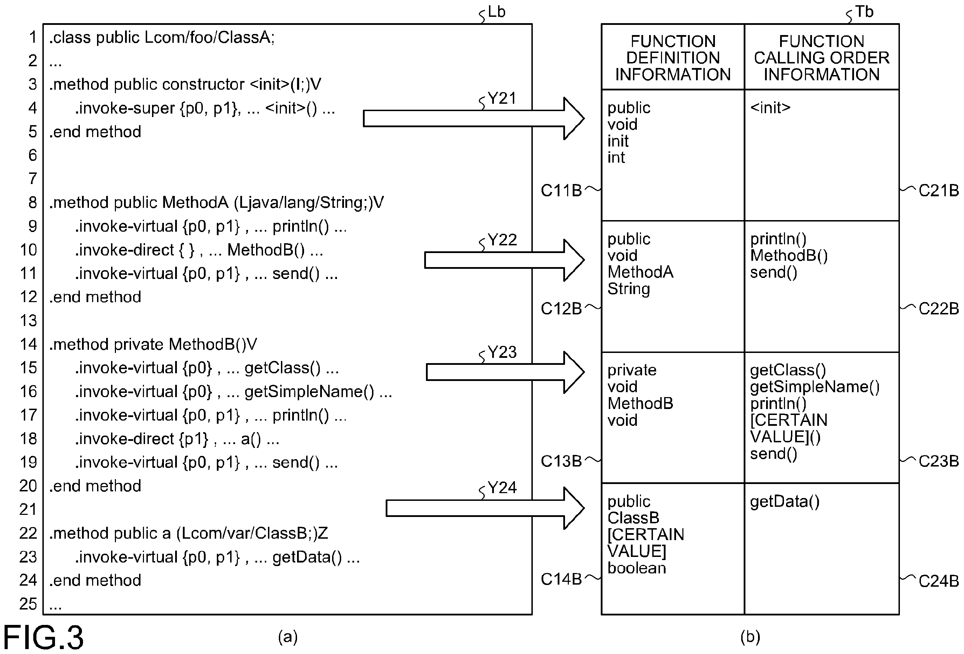

Next, the following describes processing performed by the byte code feature information extraction unit 153. FIG. 3 is a diagram illustrating an example of the byte code implemented in the programming language Java and the feature information extracted from the byte code. FIG. 3(a) illustrates byte code Lb by way of example, and FIG. 3(b) illustrates feature information Tb extracted from the byte code Lb. In the feature information Tb, the function definition information is written in a left column, and the function calling order information is written in a right column.

The byte code feature information extraction unit 153 receives an input of the byte code Lb of the program, and extracts the feature information Tb as indicated by arrows Y21 to Y24 by analyzing the byte code. Before extracting the information from the byte code, the byte code feature information extraction unit 153 may convert the byte code into a readable text format by using a disassembler, for example.

The byte code feature information extraction unit 153 extracts, from the byte code Lb (refer to FIG. 3(a)), the modifier, the type of the return value, the identifier, and the type of the argument as the function definition information. The byte code feature information extraction unit 153 sequentially writes the extracted pieces of function definition information in the left column of the feature information Tb (refer to FIG. 3(b)) as indicated by the arrows Y21 to Y24. The byte code feature information extraction unit 153 extracts, from the source code Lb, the function names to be executed in the function in the execution order as the function calling order information. The byte code feature information extraction unit 153 sequentially writes the extracted functions as the function calling order information in the right column of the feature information Tb in the execution order as indicated by the arrows Y21 to Y24.

For example, the byte code feature information extraction unit 153 extracts the modifier (public), the type of the return value (void), the identifier (init), and the type of the argument (int) from the 3rd line to the 5th line of the byte code Lb, and writes them in a cell C11B of the feature information Tb as the function definition information as indicated by the arrow Y21. The byte code feature information extraction unit 153 extracts the function name (init) to be executed in the function from the 3rd line to the 5th line of the byte code Lb, and writes it in a cell C21B of the feature information Tb as the function calling order information as indicated by the arrow Y21.

However, in a case in which the function name is very short due to obfuscation processing or compression processing of the source code and the definition of the function and calling of the function can be associated therewith, the byte code feature information extraction unit 153 regards the function name as a certain function name and complements the information. The byte code feature information extraction unit 153 extracts the complemented certain function name as the feature data.

For example, in the byte code Lb in FIG. 3(a), there are functions having the function name of "a" (the 18th line, the 22nd line) due to obfuscation processing. It can be found that the function "a" is called by the function "MethodB" (the 14th line of the byte code Lb). In this case, the byte code feature information extraction unit 153 regards the function name corresponding to the function definition information of the function "a" and the function calling order information of the function "MethodB" as a "certain value".

Specifically, the byte code feature information extraction unit 153 regards the function "a" in the 18th line as the "certain value" as the function calling order information, and writes "[certain value]" in a cell C23B of the feature information Tb corresponding to the order of the function "a" as indicated by the arrow Y23. The byte code feature information extraction unit 153 regards the function "a" in the 22nd line as the "certain value" as the function definition information, and writes "[certain value]" in a cell C14B of the feature information Tb as indicated by the arrow Y24.

An analysis target is not limited to the source code or the byte code so long as the source code feature information extraction unit 152 and the byte code feature information extraction unit 153 can obtain the function definition information and the function calling order information.

A target extracted as the feature information by the feature information extraction unit 151 is not limited to the function in the source code and the byte code. For example, the feature information extraction unit 151 may extract the feature information from information characterizing the program such as a class and an interface in the source code and the byte code.

### Processing performed by similarity calculation unit

Next, the following describes processing performed by the similarity calculation unit 154. The similarity calculation unit 154 receives an input of the feature information of two analysis targets extracted from the feature information extraction unit 151, and calculates the similarity between the function in the source code and the function in the byte code regarding the two pieces of feature information. As described above, the two pieces of feature information are the function definition information and the function calling order information.

First, the following describes a case in which the similarity calculation unit 154 calculates the similarity in consideration of identity of the function definition using the function definition information of the two pieces of feature information. In this case, the similarity calculation unit 154 calculates the similarity in consideration of identity of the function definition by comparing the source code with the byte code to determine whether the modifier, the identifier, the type of the return value, and the type of the argument are identical.

Specifically, the following describes a case of calculating the similarity of the function definition information between the function "MethodA" of the source code La in FIG. 2(b) and the function "MethodA" of the byte code Lb in FIG. 3(b). As written in the cell C12A of the feature information Ta in FIG. 2(b), regarding the function "MethodA", the modifier is "public", the type of the return value is "void", the identifier is "MethodA", and the type of the argument is "String". On the other hand, as written in the cell C12B of the feature information Tb in FIG. 3(b), regarding the function "MethodA", the modifier is "public", the type of the return value is "void", the identifier is "MethodA", and the type of the argument is "String". Thus, between the function "MethodA" in FIG. 2(b) and the function "MethodA" in FIG. 3(b), all of four pieces of function definition information including the modifier, the identifier, the type of the return value, and the type of the argument are identical. Thus, the similarity calculation unit 154 calculates "4/4 = 1" as the similarity.

The following describes a case of calculating the similarity of the function definition information between the function "MethodA" of the source code La in FIG. 2(a) and the function "MethodB" of the byte code Lb in FIG. 3(b). In this case, as written in the cell C12A of the feature information Ta in FIG. 2(b), regarding the function "MethodA", the modifier is "public", the type of the return value is "void", the identifier is "MethodA", and the type of the argument is "String". On the other hand, as written in the cell C13B of the feature information Tb in FIG. 3(b), regarding the function "MethodB", the modifier is "private", the type of the return value is "void", the identifier is "MethodB", and the type of the argument is "void". Thus, between the function "MethodA" in FIG. 2(b) and the "MethodB" in FIG. 3(b), only the type of the return value is identical among the four pieces of function definition information. Thus, the similarity calculation unit 154 calculates "1/4 = 0.25" as the similarity.

In a case of calculating the similarity in consideration of identity of the function definition, the similarity calculation unit 154 may change priority of kinds of the function definition information by appropriately assigning weight to each kind of the function definition information extracted by the feature information extraction unit 151. It is a matter of course that the similarity calculation unit 154 does not necessarily assign such weight.

Next, the following describes a case in which the similarity calculation unit 154 calculates the similarity between the function in the source code and the function in the byte code using the function calling order information of the two pieces of feature information. In this case, the similarity calculation unit 154 calculates the similarity between the function in the source code and the function in the byte code in consideration of a partial sequence of the function calling order by applying an algorithm such as an edit distance and a longest common sequence to the function calling order information of the feature information.

First, the following describes a case in which the similarity calculation unit 154 calculates the edit distance between the function in the source code and the function in the byte code by using the function calling order information. For example, the following exemplifies a case of calculating the edit distance between the function "MethodA" in the source code La in FIG. 2(b) and the function "MethodC" in the byte code Lb in FIG. 3(b). In FIG. 3(b), the function name of the function "MethodC" in the byte code Lb is "a" due to obfuscation processing. As described above, as written in the cell C23B in FIG. 3(b), the function name of the function "a" is regarded as "[certain value]" in the function calling order information.

In the present embodiment, costs for respective procedures are determined in advance. For example, a cost for replacement is 2, and a cost for deletion is 1. In this example, the similarity calculation unit 154 requires a replacement procedure (cost 2) one time, and a deletion procedure (cost 1) two times for making the function calling order (cell C22A) of the function "MethodA" (cell C12A) in FIG. 2(b) identical to the function calling order (cell C24B) of the function "MethodC" (cell C14B) in FIG. 3(b).

The similarity calculation unit 154 calculates, as the edit distance, the sum total of products of the cost and the number of procedures. Thus, the similarity calculation unit 154 calculates "2 × 1 + 1 × 2 = 4" as the edit distance. The edit distance represents that, as a value of the edit distance is smaller, the similarity of a sequence is higher.

Next, the following describes a case of calculating the longest common sequence of the function in the source code and the function in the byte code using the function calling order information. For example, the following exemplifies a case of calculating a value of the longest common sequence of the function "MethodB" in the source code La in FIG. 2(b) and the function "MethodA" in the byte code Lb in FIG. 3(b).

First, the similarity calculation unit 154 compares the function calling order (cell C23A) of the function "MethodB" in the source code La in FIG. 2(b) with the function calling order (cell C22B) of the function "MethodA" in the byte code Lb in FIG. 3(b). Subsequently, the similarity calculation unit 154 obtains the longest subsequence as a common subsequence of the function calling order for the function calling order (cell C23A) of the function "MethodB" in the source code La and the function calling order (cell C22B) of the function "MethodA" in the byte code Lb. The similarity calculation unit 154 then obtains a length of the obtained subsequence as the similarity.

In this case, regarding the function calling order (cell C23A) of the function "MethodB" in the source code La and the function calling order (cell C22B) of the function "MethodA" in the byte code Lb, the longest subsequence as a common subsequence of the function calling order is two subsequences of "println() → send()". The length of the longest common sequence of "println() → send()" is 2. Thus, regarding the function calling order (cell C23A) of the function "MethodB" in the source code La and the function calling order (cell C22B) of the function "MethodA" in the byte code Lb, the similarity calculation unit 154 calculates 2 as the similarity in consideration of a partial sequence of the function calling order. The similarity based on the longest common sequence represents that, as a value of the longest common sequence is larger, the similarity of a sequence is higher.

The similarity calculation unit 154 can also change priority of the feature by appropriately assigning weight to the similarity based on the function definition information and the function calling order information calculated as described above. It is a matter of course that the similarity calculation unit 154 does not necessarily perform such assignment of weight.

### Processing performed by determination unit

Next, the following describes processing performed by the determination unit 155. The determination unit 155 determines, based on the similarity calculated by the similarity calculation unit 154, whether the program is generated by using specific source code. The following describes a case in which the determination unit 155 receives input data of one kind of source code and one kind of byte code, and determines the similarity therebetween.

Specifically, a certain threshold used for determination is set in advance for each of two similarities. As described above, the two similarities are the similarity based on the function definition information and the similarity based on the function calling order information. In a case in which there is a combination of functions having the similarity equal to or larger than the threshold regarding each of two similarities for the function in the source code and each of two similarities for the function in the byte code, the determination unit 155 determines that the function in the byte code is implemented by using a function portion in the source code as a comparison target.

The determination apparatus 10 may previously set a combination of three similarities calculated by the similarity calculation unit 154 in advance, the three similarities including the similarity in consideration of identity of the function definition information, and the edit distance and the longest common sequence as the similarities based on the function calling order information. The determination apparatus 10 may set a table for determination associating each combination thereof with the fact that it can be determined that the program is generated by using the specific source code, or the fact that it can be determined that the program is not generated by using the specific source code. In this case, the determination unit 155 may perform determination by referring to the table for determination, and using determination content corresponding to the combination of three similarities calculated by the similarity calculation unit 154.

The determination processing performed by the determination unit 155 is not limited to the processing of performing determination by setting the threshold for the similarity between the individual functions. For example, the determination apparatus 10 sets a threshold for a total value of a similarity calculation result of a function group included in a specific class in the byte code and a function group included in the source code. The determination unit 155 may determine, for each class, whether the byte code is implemented by using the source code as the comparison target based on whether the total value exceeds the threshold. It is a matter of course that the determination apparatus 10 may set a threshold for an arithmetic value in a case of applying each similarity to a predetermined arithmetic expression set in advance, and the determination unit 155 may perform determination based on a comparison result between the threshold and the arithmetic value in a case of applying each similarity to the arithmetic expression.

In the above description, described is a case in which the determination unit 155 performs determination based on the three similarities including the similarity in consideration of identity of the function definition information, and the edit distance and the longest common sequence as the similarities based on the function calling order information, but the embodiment is not limited thereto. In a case in which the source code as the comparison target includes a single function and is short, the determination unit 155 may perform determination based on one or two of the three similarities. For example, in a case in which the source code as the comparison target is short, the determination unit 155 may perform determination by using only the similarity in consideration of identity of the function definition information.

Described is the procedure in which the determination apparatus 10 according to the present embodiment receives inputs of one kind of source code and one kind of byte code and determines the similarity therebetween, but the embodiment is not limited thereto. The determination apparatus 10 may receive inputs of a plurality of kinds of source code and a plurality of kinds of byte code, and may determine that any kind of byte code is implemented by using any kind of source code based on the calculated similarity.

### Processing procedure in determination apparatus

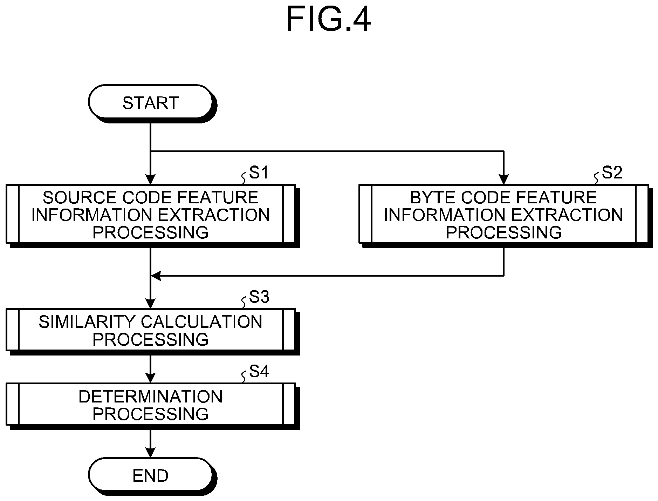

Next, the following describes an example of a processing procedure in the determination apparatus 10 with reference to FIG. 4. FIG. 4 is a flowchart illustrating the processing procedure of the determination processing performed by the determination apparatus 10 illustrated in FIG. 1.

First, the source code feature information extraction unit 152 performs source code feature information extraction processing of extracting the feature information from the input source code (Step S1). The byte code feature information extraction unit 153 performs byte code feature information extraction processing of extracting the feature information from the byte code of the program (Step S2). Step S1 and Step S2 may be performed in parallel, or may be performed in any order.

Subsequently, the similarity calculation unit 154 performs similarity calculation processing of calculating the similarity between the respective functions included in the byte code and the source code based on the feature information extracted from the source code and the feature information extracted from the byte code (Step S3).

The determination unit 155 performs determination processing of determining, based on the similarity calculated in the similarity calculation processing and the certain threshold, whether the input source code is included in the byte code (program) (Step S4). In other words, the determination unit 155 determines, based on the similarity calculated in the similarity calculation processing and the certain threshold, whether the program is generated by using the input specific source code.

### Processing procedure of source code feature information extraction processing

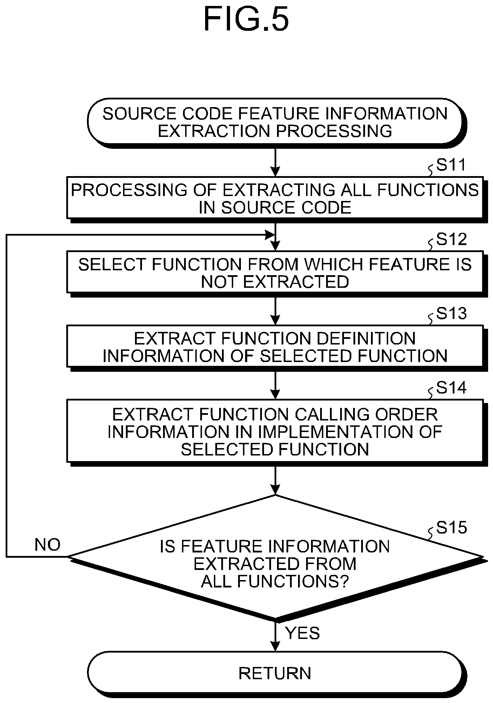

FIG. 5 is a flowchart illustrating a processing procedure of the source code feature information extraction processing illustrated in FIG. 4. In FIG. 5, it is assumed that the source code as the comparison target does not include a plurality of class definitions.

First, the source code feature information extraction unit 152 performs processing of extracting all functions written in the source code (Step S11). The source code feature information extraction unit 152 then selects a feature-unextracted function from which the feature information is not extracted from among the functions extracted at Step S11 (Step S12). Subsequently, the source code feature information extraction unit 152 extracts the function definition information from the selected function (Step S13). The source code feature information extraction unit 152 then extracts the function calling order information in implementation of the selected function (Step S14).

Subsequently, the source code feature information extraction unit 152 determines whether the feature information is extracted from all of the functions extracted at Step S11 (Step S15). If it is determined that the feature information is extracted from all of the functions extracted at Step S11 (Yes at Step S15), the source code feature information extraction unit 152 ends the source code feature information extraction processing. On the other hand, if it is determined that the feature information is not extracted from all of the functions extracted at Step S11 (No at Step S15), the source code feature information extraction unit 152 returns the process to Step S12, selects the feature-unextracted function, and performs the processing at Step S13 and succeeding processing.

### Processing procedure of byte code feature information extraction processing

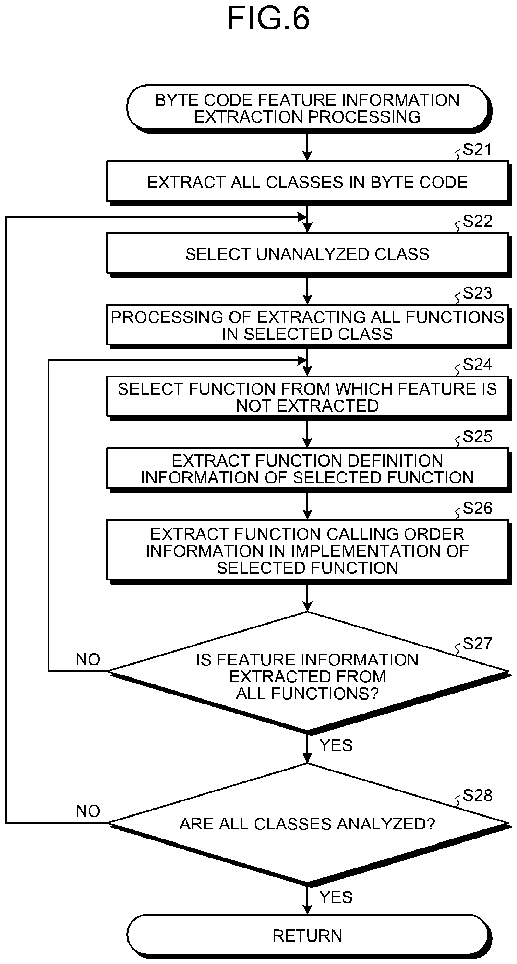

FIG. 6 is a flowchart illustrating a processing procedure of the byte code feature information extraction processing illustrated in FIG. 4. In FIG. 6, description is made assuming that the byte code as a determination target includes a plurality of class definitions.

The byte code feature information extraction unit 153 extracts all classes written in the byte code from the input byte code (Step S21). The byte code feature information extraction unit 153 selects an unanalyzed class from the extracted classes (Step S22), and performs processing of extracting all functions in the selected class (Step S23). In FIG. 6, analysis means extraction of the function definition information and the function calling order information as the feature information.

The byte code feature information extraction unit 153 then selects a feature-unextracted function from which the feature information is not extracted from among the extracted functions (Step S24), and extracts the function definition information of the selected function (Step S25). Subsequently, the byte code feature information extraction unit 153 extracts the function calling order information in implementation of the selected function (Step S26).

The byte code feature information extraction unit 153 determines whether the feature information is extracted from all of the functions extracted at Step S23 (Step S27). If it is determined that the feature information is not extracted from all of the functions extracted at Step S23 (No at Step S27), the byte code feature information extraction unit 153 returns the process to Step S24, selects the feature-unextracted function, and performs succeeding processing.

On the other hand, if it is determined that the feature information is extracted from all of the functions extracted at Step S23 (Yes at Step S27), the byte code feature information extraction unit 153 determines whether all of the classes extracted at Step S21 are analyzed (Step S28). If it is determined that all of the extracted classes are not analyzed (No at Step S28), the byte code feature information extraction unit 153 returns the process to Step S22, and selects an unanalyzed class. On the other hand, if it is determined that all of the extracted classes are analyzed (Yes at Step S28), the byte code feature information extraction unit 153 ends the byte code feature information extraction processing.

### Processing procedure of similarity calculation processing

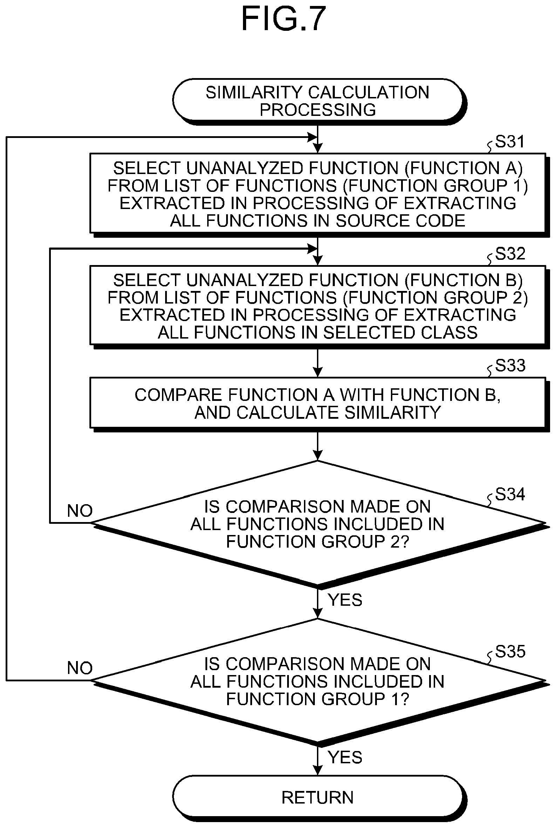

FIG. 7 is a flowchart illustrating a processing procedure of the similarity calculation processing illustrated in FIG. 4. As illustrated in FIG. 7, the similarity calculation unit 154 acquires a list of functions (referred to as a function group 1) in the source code extracted at the processing of extracting all functions in the source code (Step S11 in FIG. 5), and selects an unanalyzed function (referred to as a function A) from the function group 1 (Step S31). Similarly, the similarity calculation unit 154 acquires a list of functions (referred to as a function group 2) extracted at the processing of extracting all functions in the selected class in the byte code (Step S23 in FIG. 6), and selects an unanalyzed function (referred to as a function B) from the function group 2 (Step S32). In FIG. 7, analysis means calculation of a similarity between the function A and the function B.

Next, the similarity calculation unit 154 compares the function A in the source code with the function B in the byte code to calculate the similarity therebetween using the function definition information and the function calling order information of each of the function A and the function B selected at Step S31 and Step S32 (Step S33). As described above, the similarity calculation unit 154 calculates, as the similarities, the similarity in consideration of identity of the function definition, and the edit distance and the longest common sequence as the similarities in consideration of a partial sequence of the function calling order.

The similarity calculation unit 154 then determines whether comparison is made on all functions included in the function group 2 acquired at Step S32 (Step S34). If it is determined that comparison is not made on all of the functions included in the function group 2 acquired at Step S32 (No at Step S34), the similarity calculation unit 154 returns the process to Step S32, and selects an unanalyzed function from the function group 2.

On the other hand, if it is determined that comparison is made on all of the functions included in the function group 2 acquired at Step S32 (Yes at Step S34), the similarity calculation unit 154 determines whether comparison is made on all of the functions included in the function group 1 (Step S35). If it is determined that comparison is not made on all of the functions included in the function group 1 (No at Step S35), the similarity calculation unit 154 returns the process to Step S31, and selects an unanalyzed function from the function group 1.

On the other hand, if it is determined that comparison is made on all of the functions included in the function group 1 (Yes at Step S35), the similarity calculation unit 154 ends the similarity calculation processing. The determination unit 155 determines whether a determination target program (byte code) is generated by using the source code as the comparison target using the similarity calculation result of all of the functions included in the source code and all of the functions included in the byte code obtained as an output of the similarity calculation processing. For example, as described above, by using a certain threshold, in a case in which there is a combination of functions the similarity of which is equal to or larger than the threshold, the determination unit 155 determines that the function in the byte code is implemented by using a function portion of the source code as the comparison target.

### Effect of embodiment

In this way, in the present embodiment, the function definition information as information that defines the function, and the function calling order information in which the function names to be executed in the function are written in the execution order are extracted from each of the input source code and the byte code of the program as the feature information. In the present embodiment, the similarity between the function in the source code and the function in the byte code is calculated by using the function definition information and the function calling order information as the feature information.

The function definition information and the function calling order information can be extracted irrespective of a data format, so that, according to the present embodiment, the feature information can be extracted from each of the byte code and the source code even in a case in which the data format is different between the byte code of the program and the source code. As a result, according to the present embodiment, the similarity between the function in the source code and the function in the byte code can be appropriately calculated based on the extracted feature information. Additionally, according to the present embodiment, an appropriately calculated similarity can be acquired even in a case in which the data format is different between the byte code of the program and the source code, so that it is possible to accurately determine whether the program is generated by using the specific source code.

In the present embodiment, in a case in which the source code lacks the type information of the variable or the information of the package structure, the feature information extraction unit 151 regards the lacking portion as information of a certain variable, a certain type, or a certain package structure to extract the feature information. Additionally, in the present embodiment, in a case in which an identifier of the function in the byte code is obfuscated and the definition of the function and calling of the function can be associated therewith, the feature information extraction unit 151 regards the identifier of the function as a certain character string to extract the feature information.

In this way, in the present embodiment, even when the source code is fragmentary code with lacking information, it is sufficient that processing of complementing the lacking portion may be simple processing as described above. In the present embodiment, even in a case in which the identifier in the byte code is obfuscated, the identifier may be simply replaced with a certain character string. Thus, according to the present embodiment, for example, there is no need of complicated processing of complementing information required for compiling the source code that has been required in the related art.

In the present embodiment, the similarity calculation unit 154 calculates the similarity based on the modifier, the identifier, the type of the argument, or the type of the return value extracted as the function definition information, and calculates the similarity by applying a comparison algorithm in consideration of the order relation to the function calling order information. That is, in the present embodiment, a plurality of similarities corresponding to a plurality of kinds of feature information are calculated. Thus, in the present embodiment, the determination processing can be performed by using a plurality of similarities, and a precise determination result can be obtained. In the present embodiment, a plurality of similarities can be used, so that various methods can be selected as the determination processing, and determination processing content can be flexibly set.

### System configuration and the like

The components of the devices illustrated in the drawings are merely conceptual, and it is not required that it is physically configured as illustrated necessarily. That is, specific forms of distribution and integration of the devices are not limited to those illustrated in the drawings. All or part thereof may be functionally or physically distributed or integrated in arbitrary units depending on various loads or usage states. Additionally, all or certain part of processing functions executed in the respective devices may be implemented by a CPU and a program that is analyzed and executed by the CPU, or may be implemented as hardware based on wired logic.

Among the pieces of processing described in the present embodiment, all or part of the pieces of processing that are described to be automatically performed can be manually performed, or all or part of the pieces of processing that are described to be manually performed can be automatically performed using a known method. Additionally, the processing procedures, the control procedures, the specific names, the information including various kinds of data and parameters that are described herein or illustrated in the drawings can be optionally changed unless otherwise specifically noted.

### Program

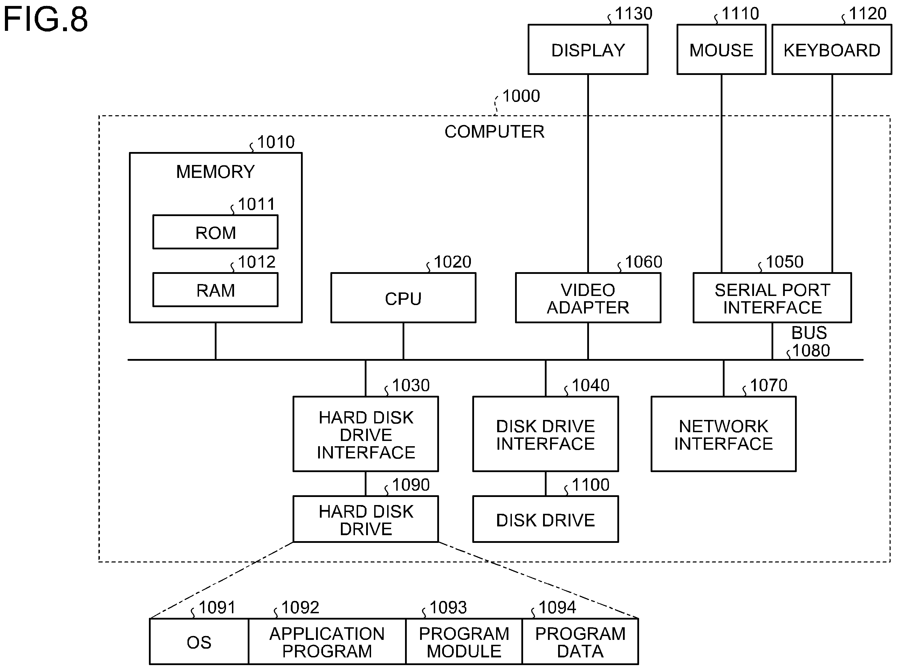

FIG. 8 is a diagram illustrating an example of a computer in which the determination apparatus 10 is implemented when the program is executed. A computer 1000 includes, for example, a memory 1010 and a CPU 1020. The computer 1000 includes a hard disk drive interface 1030, a disk drive interface 1040, a serial port interface 1050, a video adapter 1060, and a network interface 1070. These components are connected to each other via a bus 1080.

The memory 1010 includes a read only memory (ROM) 1011 and a RAM 1012. The ROM 1011 stores therein, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disc or an optical disc is inserted into the disk drive 1100. The serial port interface 1050 is connected to a mouse 1110 and a keyboard 1120, for example. The video adapter 1060 is, for example, connected to a display 1130.

The hard disk drive 1090 stores therein, for example, an OS 1091, an application program 1092, a program module 1093, and program data 1094. That is, a program specifying the pieces of processing performed by the determination apparatus 10 is implemented as the program module 1093 in which code that can be executed by the computer 1000 is written. The program module 1093 is, for example, stored in the hard disk drive 1090. For example, the program module 1093 for performing processing similar to the functional configuration of the determination apparatus 10 is stored in the hard disk drive 1090. The hard disk drive 1090 may be replaced with a solid state drive (SSD).

Setting data used in the processing according to the embodiment described above is, for example, stored in the memory 1010 or the hard disk drive 1090 as the program data 1094. The CPU 1020 reads out, as needed, the program module 1093 or the program data 1094 stored in the memory 1010 or the hard disk drive 1090 into the RAM 1012 to be executed.

The program module 1093 and the program data 1094 are not necessarily stored in the hard disk drive 1090. For example, the program module 1093 and the program data 1094 may be stored in a removable storage medium, for example, and may be read out by the CPU 1020 via the disk drive 1100 and the like. Alternatively, the program module 1093 and the program data 1094 may be stored in another computer connected via a network (LAN, WAN, and the like). The program module 1093 and the program data 1094 may be read out from another computer by the CPU 1020 via the network interface 1070.

The embodiment to which the present invention made by the present inventor is applied has been described above, but the present invention is not limited to the description and the drawings constituting part of the disclosure of the present invention according to the embodiment. That is, the present invention encompasses all other embodiments, examples, operation techniques, and the like conceived by those skilled in the art based on the present embodiment.

### Reference Signs List

- 10: Determination apparatus
- 11: Input unit
- 12: Output unit
- 13: Communication unit
- 14: Storage unit
- 15: Control unit
- 151: Feature information extraction unit
- 152: Source code feature information extraction unit
- 153: Byte code feature information extraction unit
- 154: Similarity calculation unit
- 155: Determination unit

## Claims

1. A determination apparatus (10) comprising:
a feature information extraction unit (151) configured to extract, from each of an input source code (La) and a byte code (Lb), as feature information (Ta, Tb):
- function definition information as information defining a function, and
- function calling order information in which function names to be executed in the function are written in execution order;
a similarity calculation unit (154) configured to calculate a similarity value between a function in the source code (La) and a function in the byte code (Lb) by using the feature information (Ta, Tb) extracted by the feature information extraction unit (151), wherein the similarity value is calculated by comparing a number of feature information and as a fraction of matching feature information; and
a determination unit (155) configured to determine, based on the similarity value calculated by the similarity calculation unit (154), whether the byte code (Lb) is generated using the input source code (La).

2. The determination apparatus (10) according to claim 1, wherein, in a case in which the source code (La) lacks type information of a variable or information of a package structure, the feature information extraction unit (151) regards a lack portion as information of a certain type or a certain package structure.

3. The determination apparatus (10) according to claim 1 or 2, wherein, in a case in which an identifier of the function in the byte code (Lb) is obfuscated due to obfuscation processing or compression processing of the source code and the definition of the function, and a definition of the function and calling of the function are able to be associated with the identifier, the feature information extraction unit (151) regards the identifier of the function as a certain character string.

4. The determination apparatus (10) according to any one of claims 1 to 3, wherein
the feature information extraction unit (151) extracts a modifier, an identifier, and types of an argument and a return value as the function definition information, and
the similarity calculation unit (154) calculates the similarity value based on the modifier, the identifier, and the types of the argument and the return value extracted by the feature information extraction unit (151).

5. The determination apparatus (10) according to any one of claims 1 to 4, wherein the similarity calculation unit (154) calculates the similarity value by applying a comparison algorithm in consideration of an order relation to the function calling order information extracted by the feature information extraction unit (151).

6. A determination method executed by a determination apparatus (10) that determines whether a byte code (Lb) is generated by using an input source code (La), the method comprising:
a feature information extraction process (S1, S2) for extracting, from each of the input source code (La) and the byte code (Lb), as feature information:
- function definition information as information defining a function, and
- function calling order information in which function names to be executed in the function are written in execution order;
a similarity calculation process (S3) for calculating a similarity value between a function in the source code (La) and a function in the byte code (Lb) by using the feature information extracted at the feature information extraction process (S1, S2), wherein the similarity value is calculated by comparing a number of feature information and as a fraction of matching feature information; and
a determination process (S4) for determining, based on the similarity value calculated at the similarity calculation process (S3), whether the program is generated by using specific source code (La).

7. A determination program for causing a computer to execute:
a feature information extraction step (S1, S2) for extracting, from each of an input source code (La) and a byte code (Lb), as feature information:
- function definition information as information defining a function, and
- function calling order information in which function names to be executed in the function are written in execution order;
a similarity calculation step (S3) for calculating a similarity value between a function in the source code (La) and a function in the byte code (Lb) by using the feature information extracted at the feature information extraction step (S1, S2), wherein the similarity value is calculated by comparing a number of feature information and as a fraction of matching feature information; and
a determination step (S4) for determining, based on the similarity value calculated at the similarity calculation step (S3), whether the program is generated using the input source code (La).

## Patentansprüche

1. Bestimmungsvorrichtung (10), umfassend:
eine Merkmalsinformationsextraktionseinheit (151), die dafür ausgelegt ist, aus jedem eines Eingabequellcodes (La) und eines Bytecodes (Lb) als Merkmalsinformationen (Ta, Tb) zu extrahieren:
- eine Funktionsdefinitionsinformation als Information, die eine Funktion definiert, und
- eine Funktionsaufrufreihenfolgeinformation, in der Funktionsnamen, die in der Funktion auszuführen sind, in Ausführungsreihenfolge geschrieben sind;
eine Ähnlichkeitsberechnungseinheit (154), die dafür ausgelegt ist, einen Ähnlichkeitswert zwischen einer Funktion in dem Quellcode (La) und einer Funktion in dem Bytecode (Lb) unter Verwendung der Merkmalsinformationen (Ta, Tb), die durch die Merkmalsinformationsextraktionseinheit (151) extrahiert wurden, zu berechnen, wobei der Ähnlichkeitswert durch Vergleichen einer Anzahl von Merkmalsinformationen und als ein Bruchteil von übereinstimmenden Merkmalsinformationen berechnet wird; und
eine Bestimmungseinheit (155), die dafür ausgelegt ist, basierend auf dem Ähnlichkeitswert, der durch die Ähnlichkeitsberechnungseinheit (154) berechnet wurde, zu bestimmen, ob der Bytecode (Lb) unter Verwendung des Eingangsquellcodes (La) generiert wird.

2. Bestimmungsvorrichtung (10) nach Anspruch 1, wobei, in einem Fall, in dem dem Quellcode (La) Typinformationen einer Variable oder Informationen einer Paketstruktur fehlen, die Merkmalsinformationsextraktionseinheit (151) einen fehlenden Abschnitt als Information eines bestimmten Typs oder einer bestimmten Paketstruktur betrachtet.

3. Bestimmungsvorrichtung (10) nach Anspruch 1 oder 2, wobei, in einem Fall, in dem eine Kennung der Funktion in dem Bytecode (Lb) aufgrund von Obfuskationsverarbeitung oder Kompressionsverarbeitung des Quellcodes und der Definition der Funktion verschleiert ist, und eine Definition der Funktion und Aufrufen der Funktion der Kennung zugeordnet werden können, die Merkmalsinformationsextraktionseinheit (151) die Kennung der Funktion als eine bestimmte Zeichenkette betrachtet.

4. Bestimmungsvorrichtung (10) nach einem der Ansprüche 1 bis 3, wobei
die Merkmalsinformationsextraktionseinheit (151) einen Modifikator, eine Kennung und Typen eines Arguments und einen Rückgabewert als die Funktionsdefinitionsinformation extrahiert, und
die Ähnlichkeitsberechnungseinheit (154) den Ähnlichkeitswert basierend auf dem Modifikator, der Kennung und den Typen des Arguments und dem Rückgabewert, die von der Merkmalsinformationsextraktionseinheit (151) extrahiert wurden, berechnet.

5. Bestimmungsvorrichtung (10) nach einem der Ansprüche 1 bis 4, wobei die Ähnlichkeitsberechnungseinheit (154) den Ähnlichkeitswert durch Anwenden eines Vergleichsalgorithmus unter Berücksichtigung einer Reihenfolgenbeziehung auf die Funktionsaufrufreihenfolgeinformationen, die von der Merkmalsinformationsextraktionseinheit (151) extrahiert wurden, berechnet.

6. Bestimmungsverfahren, das von einer Bestimmungsvorrichtung (10) ausgeführt wird, die bestimmt, ob ein Bytecode (Lb) unter Verwendung eines Eingabequellcodes (La) generiert wird, wobei das Verfahren umfasst:
einen Merkmalsinformationsextraktionsprozess (S1, S2) zum Extrahieren, aus jedem des Eingabequellcodes (La) und des Bytecodes (Lb), als Merkmalsinformation:
- eine Funktionsdefinitionsinformation als Information, die eine Funktion definiert, und
- eine Funktionsaufrufreihenfolgeinformation, in der Funktionsnamen, die in der Funktion auszuführen sind, in Ausführungsreihenfolge geschrieben sind;
ein Ähnlichkeitsberechnungsprozess (S3) zum Berechnen eines Ähnlichkeitswerts zwischen einer Funktion in dem Quellcode (La) und einer Funktion in dem Bytecode (Lb) unter Verwendung der Merkmalsinformationen, die in dem Merkmalsinformationsextraktionsprozess (S1, S2) extrahiert wurden, wobei der Ähnlichkeitswert durch Vergleichen einer Anzahl von Merkmalsinformationen und als ein Bruchteil von übereinstimmenden Merkmalsinformationen berechnet wird; und
einen Bestimmungsprozess (S4) zum Bestimmen, basierend auf dem Ähnlichkeitswert, der in dem Ähnlichkeitsberechnungsprozess (S3) berechnet wurde, ob das Programm unter Verwendung spezifischen Quellcodes (La) generiert wird.

7. Bestimmungsprogramm zum Veranlassen eines Computers auszuführen:
einen Merkmalsinformationsextraktionsschritt (S1, S2) zum Extrahieren, aus jedem eines Eingabequellcodes (La) und eines Bytecodes (Lb), als Merkmalsinformation:
- einer Funktionsdefinitionsinformation als Information, die eine Funktion definiert, und
- einer Funktionsaufrufreihenfolgeinformation, in der Funktionsnamen, die in der Funktion auszuführen sind, in Ausführungsreihenfolge geschrieben sind;
einen Ähnlichkeitsberechnungsschritt (S3) zum Berechnen eines Ähnlichkeitswerts zwischen einer Funktion in dem Quellcode (La) und einer Funktion in dem Bytecode (Lb) unter Verwendung der Merkmalsinformationen, die in dem Merkmalsinformationsextraktionsschritt (S1, S2) extrahiert wurden, wobei der Ähnlichkeitswert durch Vergleichen einer Anzahl von Merkmalsinformationen und als ein Bruchteil von übereinstimmenden Merkmalsinformationen berechnet wird; und
einen Bestimmungsschritt (S4) zum Bestimmen, basierend auf dem Ähnlichkeitswert, der in dem Ähnlichkeitsberechnungsschritt (S3) berechnet wurde, ob das Programm unter Verwendung des Eingabequellcodes (La) generiert wird.

## Revendications

1. Appareil de détermination (10) comprenant :
une unité d'extraction d'informations de caractéristiques (151) configurée pour extraire, à partir de chacun d'un code source d'entrée (La) et d'un code intermédiaire (Lb), en tant qu'informations de caractéristiques (Ta, Tb) :
- des informations de définition de fonction en tant qu'informations définissant une fonction, et
- des informations d'ordre d'appel de fonctions dans lesquelles des noms de fonction à exécuter dans la fonction sont écrits dans un ordre d'exécution ;
une unité de calcul de similitude (154) configurée pour calculer une valeur de similitude entre une fonction dans le code source (La) et une fonction dans le code intermédiaire (Lb) en utilisant les informations de caractéristiques (Ta, Tb) extraites par l'unité d'extraction d'informations de caractéristiques (151), dans lequel la valeur de similitude est calculée en comparant un nombre d'informations de caractéristiques et en tant que fraction d'informations de caractéristiques correspondantes ; et
une unité de détermination (155) configurée pour déterminer, sur la base de la valeur de similitude calculée par l'unité de calcul de similitude (154), si le code intermédiaire (Lb) est généré en utilisant le code source d'entrée (La).

2. Appareil de détermination (10) selon la revendication 1, dans lequel, dans un cas où le code source (La) manque d'informations de type d'une variable ou d'informations d'une structure d'ensemble, l'unité d'extraction d'informations de caractéristiques (151) considère une partie manquante comme des informations d'un certain type ou d'une certaine structure d'ensemble.

3. Appareil de détermination (10) selon la revendication 1 ou 2, dans lequel, dans un cas où un identifiant de la fonction dans le code intermédiaire (Lb) est brouillé en raison d'un processus de brouillage ou d'un processus de compression du code source et de la définition de la fonction, et une définition de la fonction et un appel de la fonction peuvent être associés à l'identifiant, l'unité d'extraction d'informations de caractéristiques (151) considère l'identifiant de la fonction comme une certaine chaîne de caractères.

4. Appareil de détermination (10) selon l'une quelconque des revendications 1 à 3, dans lequel
l'unité d'extraction d'informations de caractéristiques (151) extrait un modificateur, un identifiant, et des types d'un argument et d'une valeur de récurrence en tant qu'informations de définition de fonction, et
l'unité de calcul de similitude (154) calcule la valeur de similitude sur la base du modificateur, de l'identifiant, et des types de l'argument et de la valeur de récurrence extraits par l'unité d'extraction d'informations de caractéristiques (151).

5. Appareil de détermination (10) selon l'une quelconque des revendications 1 à 4, dans lequel l'unité de calcul de similitude (154) calcule la valeur de similitude par l'application d'un algorithme de comparaison en tenant compte d'une relation d'ordre concernant les informations d'ordre d'appel de fonctions extraites par l'unité d'extraction d'informations de caractéristiques (151).

6. Procédé de détermination exécuté par un appareil de détermination (10) qui détermine si un code intermédiaire (Lb) est généré en utilisant un code source d'entrée (La), le procédé comprenant :
un processus d'extraction d'informations de caractéristiques (S1, S2) pour extraire, à partir de chacun du code source d'entrée (La) et du code intermédiaire (Lb), en tant qu'informations de caractéristiques :
- des informations de définition de fonction en tant qu'informations définissant une fonction, et
- des informations d'ordre d'appel de fonctions dans lesquelles des noms de fonction à exécuter dans la fonction sont écrits dans un ordre d'exécution ;
un processus de calcul de similitude (S3) pour calculer une valeur de similitude entre une fonction dans le code source (La) et une fonction dans le code intermédiaire (Lb) en utilisant les informations de caractéristiques extraites au niveau du processus d'extraction d'informations de caractéristiques (S1, S2), dans lequel la valeur de similitude est calculée en comparant un nombre d'informations de caractéristiques et en tant que fraction d'informations de caractéristiques correspondantes ; et
un processus de détermination (S4) pour déterminer, sur la base de la valeur de similitude calculée au niveau du processus de calcul de similitude (S3), si le programme est généré en utilisant le code source (La) spécifique.

7. Programme de détermination permettant de faire en sorte qu'un ordinateur exécute :
une étape d'extraction d'informations de caractéristiques (S1, S2) pour extraire, à partir de chacun d'un code source d'entrée (La) et d'un code intermédiaire (Lb), en tant qu'informations de caractéristiques :
- des informations de définition de fonction en tant qu'informations définissant une fonction, et
- des informations d'ordre d'appel de fonctions dans lesquelles des noms de fonction à exécuter dans la fonction sont écrits dans un ordre d'exécution ;
une étape de calcul de similitude (S3) pour calculer une valeur de similitude entre une fonction dans le code source (La) et une fonction dans le code intermédiaire (Lb) en utilisant les informations de caractéristiques extraites au niveau de l'étape d'extraction d'informations de caractéristiques (S1, S2), dans lequel la valeur de similitude est calculée en comparant un nombre d'informations de caractéristiques et en tant que fraction d'informations de caractéristiques correspondantes ; et
une étape de détermination (S4) pour déterminer, sur la base de la valeur de similitude calculée au niveau de l'étape de calcul de similitude (S3), si le programme est généré en utilisant le code source d'entrée (La).
